# EUROPÄISCHE PATENTSCHRIFT

(11) **EP 4 237 625 B1**
(45) Veröffentlichungstag und Bekanntmachung des Hinweises auf die Patenterteilung: **20.11.2024**
(21) Anmeldenummer: 21786123.6
(22) Anmeldetag: 28.09.2021
(51) Int. Cl.: E02D 27/42, E02D 27/52, F03D 13/25, H02G 1/10, H02G 9/02, E02B 17/02, E02B 17/00, E04H 12/22

(54) **OFFSHORE-WINDENERGIESYSTEM**
OFFSHORE WIND ENERGY SYSTEM
SYSTÈME D'ÉNERGIE ÉOLIEN OFFSHORE

(30) Priorität: 28.10.2020 DE 102020128293
(43) Veröffentlichungstag der Anmeldung: 06.09.2023
(73) Patentinhaber: RWE Offshore Wind GmbH, 45141 Essen (DE)
(72) Erfinder: BARTMINN, Daniel, 25335 Elmshorn (DE); CZARNECKI, Artur, 22301 Hamburg (DE)
(74) Vertreter: Cohausz & Florack
(86) Internationale Anmeldenummer: PCT/EP2021/076557
(87) Internationale Veröffentlichungsnummer: WO 2022/089858

(56) Entgegenhaltungen:
- EP-A1- 3 696 326
- WO-A1-2005/005752
- WO-A1-2016/189037
- WO-A1-2020/074421
- WO-A1-2020/157196
- CN-A- 104 934 920
- CN-A- 108 808 568
- CN-A- 110 571 745
- CN-A- 111 264 513
- KR-B1- 102 067 256

## Beschreibung

Die Erfindung betrifft ein Offshore-Windenergiesystem.

Vermehrt werden Offshore-Bauwerke errichtet, insbesondere auf dem Meer. So werden zur elektrischen Energieerzeugung bzw. zur Bereitstellung elektrischer Energie aus sogenannten erneuerbaren Energiequellen beispielsweise Offshore-Windparks mit einer Vielzahl von Offshore-Windenergiebauwerken installiert. Offshore-Standorte zeichnen sich üblicherweise durch relativ kontinuierliche Windbedingungen und hohe durchschnittliche Windgeschwindigkeiten aus, so dass vermehrt so genannte Offshore-Windparks errichtet werden.

In der Regel weist ein Offshore-Windpark eine Vielzahl an Offshore-Windenergiebauwerken auf, wie eine Vielzahl von Offshore-Windkraftanlagen, Messmasten und/oder mindestens eine Offshore-Umspannstation. Über die Offshore-Umspannstation kann der Offshore-Windpark elektrisch beispielsweise mit einer Onshore-Umspannstation oder einer weiteren Offshore-Umspannstation bzw. Offshore-Konverterstation verbunden sein. Eine Onshore-Umspannstation wiederum kann mit einem öffentlichen Stromnetz verbunden sein.

Eine Offshore-Windkraftanlage ist zum Wandeln der kinetischen Windenergie in elektrische Energie eingerichtet. Zum Übertragen der erzeugten elektrischen Energie zwischen zwei Offshore-Windenergiebauwerken oder einem Offshore-Windenergiebauwerk und einem Onshore-Bauwerk werden Energiekabel in Form von Seekabeln verlegt. Insbesondere kann ein Seekabel mit einem Generator einer Offshore-Windkraftanlage elektrisch verbunden sein.

Bei Offshore-Windparks, aber auch bei anderen Offshore-Bauwerken (z.B. Plattformen zur Exploration von Gas und/oder Öl), ist es üblich, ein Offshore-Bauwerk durch eine Gründung (z.B. Monopile-, Tripod-, Tripile- oder Jacket-Gründungen) auf bzw. in dem Unterwasserboden, insbesondere einem Meeresboden, direkt zu verankern (auch gründen genannt).

Eine Gründung verfügt über mindestens ein turmförmiges, insbesondere zylinderförmiges, Hohlstrukturelement (auch turmförmige Gründungsstruktur genannt). Ein Hohlstrukturelement weist in der Regel eine sich in Längsrichtung erstreckende, umlaufende Wandung auf, wobei die (Gründungs-) Wandung unterseitig mit einer unterseitigen Stirnfläche und oberseitig mit einer oberen Stirnfläche begrenzt sein kann.

Wie bereits beschrieben wurde, ist es beispielsweise bei einer Offshore-Windkraftanlage erforderlich, den generierten elektrischen Strom (bzw. elektrische Energie) durch ein Seekabel zu einem weiteren (Offshore-) Bauwerk z.B. des Windparks zu transportieren.

Aus dem Stand der Technik ist es bei Offshore-Bauwerken bekannt, ein an eine Offshore-Einrichtung des Offshore-Bauwerks angeschlossenes Seekabel durch so genannte J-tubes zur Unterwasserbodenoberfläche (insbesondere eine Meeresbodenoberfläche) zu führen. Problematisch an J-tubes ist jedoch, dass diese zusätzliche Wellenlasten verursachen können. Zudem können diese durch einen Schiffsanprall beschädigt werden und müssen zudem regelmäßig von Bewuchs befreit werden.

Zur Lösung dieser Problematik ist es aus dem Stand der Technik bekannt, ein Seekabel zunächst durch den Innen- bzw. Hohlraum des mindestens einen Hohlstrukturelements (insbesondere frei hängend) von der Offshore-Einrichtung nach unten zu führen. In der Nähe der Unterwasserbodenoberfläche (Abstand < 1 m) ist in der Wandung des Hohlstrukturelements eine Kabeldurchführung bzw. Kabelaussparung vorgesehen, durch die das Seekabel von dem Innenraum nach außen zur Unterwasserbodenoberfläche geführt ist.

Insbesondere bei Gründungen, umfassend ein erstes Hohlstrukturelement und ein zweites Hohlstrukturelement, die ineinander gesteckt sind, aber auch bei anderen Gründungen, stellt die Herausführung des Seekabels eine große Herausforderung dar. Wenn beispielsweise zwei Hohlstrukturelemente in Unterwasserbodenoberflächennähe zusammengesteckt sind und ein Ringraum zwischen der inneren Mantelfläche des zweiten Hohlstrukturelements und der äußeren Mantelfläche des ersten Hohlstrukturelements vergroutet ist und/oder ein so genannter Slip-joint zwischen den Hohlstrukturelementen hergestellt ist, ist die Herausführung eines Seekabels aus dem Innenraum komplex und aufwendig.

So ist ein gleichzeitiges Durchdringen von zwei konzentrisch Übereinanderliegenden Hohlstrukturelementen erforderlich. Besonders problematisch hieran ist, dass diese Hohlstrukturelemente erst am Installationsort des Offshore-Bauwerks montiert werden und es bei der Montage regelmäßig dazu kommt, dass die Hohlstrukturelemente gegeneinander leicht verdreht installiert werden. Dies hat zur Folge, dass sich die Kabeldurchführungen in den jeweiligen Hohlstrukturelementen nicht überlappen können und daher eine Herausführung eines Seekabels nicht möglich ist. Um dies zu verhindern, ist insbesondere eine äußerst exakte Montage der Hohlstrukturelemente erforderlich. Dies erhöht jedoch den Aufwand der Installation.

Zudem wird der Ringraum zwischen den Hohlstrukturelementen regelmäßig vergroutet. Um zu verhindern, dass das Groutmaterial durch die im Bereich des Ringraums angeordneten Kabeldurchführungen in den Innenraum dringt, ist eine besondere Abdichtung der Kabeldurchführungen gegen das Groutmaterial erforderlich. Diese Abdichtung darf bei der Montage der Hohlstrukturelemente nicht beschädigt werden. Dies erhöht den Aufwand der Installation zusätzlich. Grundsätzlich wäre eine Lösung der vorbeschriebenen Problematik, das Seekabel oberhalb des Überlappbereichs bzw. des Ringraumbereichs aus dem Innenraum herauszuführen. Dies wird im Stand der Technik bisher jedoch als nicht realisierbar erachtet. Insbesondere bei den dann großen Abständen zur Unterwasserbodenoberfläche von mehr als 5 m ist das Seekabel den starken Strömungskräften auf dieser Strecke ungeschützt ausgesetzt. Dies hätte eine übermäßige Belastung des Seekabels zur Folge, die mit den am Markt verfügbaren Kabelschutzsystemen nicht abzufangen ist.

Gattungsgemäße Offshore- Windenergie systeme mit mindestens einer Kabelführungsanordnung an einem Hohlstrukturelement sind von EP3696326A1, WO2020/074421A1, WO2020/157196A1 und von CN104934920A bekannt. Daher liegt der Erfindung die Aufgabe zugrunde, ein Offshore-Windenergiesystem bereitzustellen, bei dem die zuvor beschriebenen Nachteile zumindest reduziert sind und insbesondere eine Führung des Seekabels aus einer Gründung heraus zu einer Unterwasserbodenoberfläche in einfacherer und aufwandsreduzierter Weise möglich ist.

Die Aufgabe ist gelöst durch ein Offshore-Windenergiesystem nach Anspruch 1.

Indem im Gegensatz zum Stand der Technik gemäß Anspruch 1 ein Offshore-Windenergiesystem mit einer Kabelführungsanordnung bereitgestellt wird, die ein durch eine Kabeldurchführung austretendes Seekabel zur

Unterwasserbodenoberfläche führt, werden die Nachteile des Stands der Technik zumindest reduziert. Insbesondere ist eine Führung des Seekabels aus einer Gründung heraus zu einer Unterwasserbodenoberfläche in einfacherer und aufwandsreduzierter Weise möglich.

Durch die Kabelführungsanordnung wird insbesondere die Belastung des Seekabels aufgrund von Strömungskräften, die auf das Seekabel wirken können, reduziert. Dies ermöglicht es, das Seekabel auch in einer Höhe von über 5 m über der Unterwasserseebodenoberfläche (in einem initialen Installationszustand der Gründung) aus der Gründung hinauszuführen.

Ein erfindungsgemäßes Offshore-Windenergiesystem umfasst mindestens eine Gründung und mindestens eine Kabelführungsanordnung.

Eine Gründung ist insbesondere Teil eines Offshore-Bauwerks und dient vorzugsweise dem Tragen mindestens einer Offshore-Einrichtung des Offshore-Bauwerks. Ein Offshore-Bauwerk ist vorzugsweise ein Offshore-Windenergiebauwerk, wie eine Offshore-Windkraftanlage, ein Offshore-Messmast oder eine Offshore-Umspannstation. Insbesondere ist es ein Offshore-Bauwerk, an dem mindestens ein Seekabel angeschlossen ist. Insbesondere kann das Seekabel an die Offshore-Einrichtung des Offshore-Bauwerks angeschlossen sein. So kann ein Offshore-Bauwerk auch eine Bohr- oder Förderplattform oder eine andere Offshore-Plattform sein, vorzugsweise eingerichtet zur Gewinnung, Umwandlung und/oder Speicherung von Energie, wie z.B. eine Offshore-Anlage zur Produktion von Wasserstoff (sofern ein Seekabel an das Offshore-Bauwerk angeschlossen ist).

Wie bereits beschrieben wurde, kann ein Offshore-Bauwerk eine Offshore-Einrichtung umfassen, die durch die Gründung in einem Unterwasserboden, insbesondere ein Meeresboden, befestigt sein kann. Ein Offshore-Bauwerk kann insbesondere durch die Offshore-Einrichtung (z.B. eine Plattform, eine Gondel, Turm, Generator, Rotor, Umspannvorrichtung und/oder dergleichen) und die mindesten eine Gründung gebildet sein.

Die Gründung umfasst ein erstes Hohlstrukturelement bzw. eine erste turmförmige Gründungsstruktur. Ein Hohlstrukturelement ist vorzugsweise zylinderförmig. Ein zylinderförmiges Hohlstrukturelement kann insbesondere ein Hohlpfahl sein.

Das erste Hohlstrukturelement weist eine sich in Längsrichtung (also entlang der Längsachse des Hohlstrukturelements) erstreckende, umlaufende erste Wandung auf.

Insbesondere kann ein Hohlstrukturelement eine kreisförmige Querschnittsfläche aufweisen. Bei anderen Varianten kann auch eine andere Querschnittsfläche vorgesehen sein, wie eine ovalförmige.

Eine Wandung eines Hohlstrukturelements kann zwei distale Enden aufweisen, die jeweils durch gegenüberliegende Stirnflächen begrenzt sind. Eine erste Stirnfläche kann eine oberseitige Stirnfläche sein und eine zweite Stirnfläche kann eine unterseitige Stirnfläche sein. Ober- und Unterseite können durch die Position des Hohlstrukturelements im finalen Installationszustand definiert sein. Dabei ist im Installationszustand die untere Stirnfläche in Richtung des Unterwasserbodens angeordnet. Die obere Stirnfläche kann insbesondere zumindest aus dem Unterwasserboden in Richtung der Wasseroberfläche ragen.

In der ersten Wandung ist eine die erste Wandung durchbrechende Kabeldurchführung bzw. Aussparung zur Durchführung eines Seekabels angeordnet. Eine Kabeldurchführung ist insbesondere derart gebildet, dass ein Seekabel aus dem Inneren des ersten Hohlstrukturelements nach außen geführt werden kann. Insbesondere kann das Seekabel in einem durch die erste Wandung gebildeten Hohlraum bzw. Innenraum (frei) hängend angeordnet sein und durch die Kabeldurchführung aus dem Hohlraum nach außen geführt sein.

Bei beispielsweise einer Offshore-Windkraftanlage kann in einem montierten Zustand nicht nur die Gründung, sondern auch die Offshore-Einrichtung montiert sein, umfassend einen Turm mit Gondel samt Turbine und Windrad. Von dem Generator, der in der Gondel sitzt, kann das Seekabel durch den Turm und das erste Hohlstrukturelement hin zu der Kabeldurchführung verlaufen und dort aus der Gründung herausgeführt sein.

Die auf ein nach außen geführtes Seekabel wirkenden Kräfte können reduziert werden, wenn an der äußeren Mantelfläche bzw. Außenseite der ersten Wandung des ersten Hohlstrukturelements eine Kabelführungsanordnung angeordnet ist. Eine Anordnung an der äußeren Mantelfläche meint insbesondere, dass die Kabelführungsanordnung außerhalb der Gründung angeordnet ist. Erfindungsgemäß umfasst eine Anordnung an der äußeren Mantelfläche eine radiale Beabstandung der Kabelführungsanordnung von der äußeren Mantelfläche der Gründung.

Die Kabelführungsanordnung erstreckt sich, ausgehend von dem ersten Hohlstrukturelement, in eine radiale Richtung. Vorzugsweise kann die Kabelführungsanordnung zu der Kabeldurchführung ausgerichtet sein. Die Kabelführungsanördnung ist eine separate Anordnung und kann insbesondere auf der Unterwasserbodenoberfläche angeordnet sein, beispielsweise an dem Unterwasserboden befestigt sein.

Gemäß der Erfindung berührt die Kabelführungsanordnung und dessen mindestens ein Element nicht direkt die äußere Mantelfläche des ersten Hohlstrukturelements und ist in einem radialen Abstand zwischen 0,25 m und 3m von der äußeren Mantelfläche angeordnet, vorzugsweise in einem radialen Abstand von bis zu 5m.

Die Kabelführungsanordnung ist derart eingerichtet, dass das austretende Seekabel in radialer Richtung von der Kabeldurchführung zu einer Unterwasserbodenoberfläche des Unterwasserbodens geführt wird. Ein Führen des Seekabels meint vorliegend insbesondere, dass die Bewegungsfreiheit des Seekabels in horizontaler und/oder vertikaler Richtung durch die Kabelführungsanordnung zumindest eingeschränkt ist. Hierdurch können die durch eine Strömung auf das Seekabel ausgeübten Kräfte und damit die Belastung des Seekabels reduziert werden.

Es versteht sich, dass zwei oder mehr Kabeldurchführungen vorgesehen sein können, beispielsweise für eine entsprechende Anzahl an Seekabeln. Ferner versteht es sich, dass eine entsprechende Anzahl an Kabelführungsanordnungen vorgesehen sein kann.

Gemäß einer bevorzugten Ausführungsform des Offshore-Windenergiesystems kann die Kabeldurchführung des ersten Hohlstrukturelements in einem Installationszustand der Gründung zumindest über 5 m oberhalb der Unterwasserbodenoberfläche liegen, insbesondere über 6 m, insbesondere bevorzugt zwischen 8 m und 12 m. Anders ausgedrückt, kann der Abstand zwischen der Unterwasserbodenoberfläche und insbesondere der Unterkante der Kabeldurchführung größer sein als 5 m, vorzugsweise größer als 6 m und insbesondere bevorzugt zwischen 8 m und 12 m liegen.

Die Unterwasserbodenoberfläche ist vorliegend insbesondere als die vertikale Ebene definiert, welche in den Planunterlagen des Offshore-Bauwerks (insbesondere eines Offshore-Windparks) als Wassertiefe unterhalb der Bezugsebene LAT (lowest Astronomical tide - niedrigster Wasserstand) angegeben ist. Hierbei versteht es sich, dass sich die Wassertiefe und damit der Abstand zur Kabeldurchführung nach einer Installation des Offshore-Bauwerks ändern können, beispielsweise durch eine Abtragung oder Anhäufung von Sedimenten und/oder einem Anschütten eines Kolkschutzes Insbesondere kann das Seekabel aufgrund der Anordnung der Kabelführungsanordnung in sicherer Weise aus dem ersten Hohlstrukturelement auch bei den genannten Höhen herausgeführt werden. Dies ermöglicht es, in dem Bereich zwischen 0 m und 5 m, vorzugsweise 8 m, Dichtungsmaßnahmen und/oder ein Vergrouten vorzunehmen, ohne dass hierdurch ein Herausführen des Seekabels komplex und aufwendig wird.

Gemäß einer bevorzugten Ausführungsform des Offshore-Windenergiesystems kann die Gründung ein zweites Hohlstrukturelement umfassen. Das zweite Hohlstrukturelement kann einen Überlappabschnitt aufweisen, der (außenseitig oder innenseitig) über einen Endabschnitt (auch Überlappabschnitt genannt) des ersten Hohlstrukturelement ragt, und einen Einbindeabschnitt, der zumindest teilweise in einem Unterwasserboden einbindbar ist. Die Kabeldurchführung des ersten Hohlstrukturelements kann (in einem Installationszustand der Gründung) zumindest oberhalb des Überlappabschnitts (also oberhalb des oberen Endes des zweiten Hohlstrukturelements) angeordnet sein. Insbesondere können das erste Hohlstrukturelement und das zweite Hohlstrukturelement in dem Überlappabschnitt ineinandergesteckt sein. Vorzugsweise können zwei konzentrische und ineinandergesteckte Rohre als Gründung ausgebildet sein. Beispielsweise kann das erste Hohlstrukturelement einen Außendurchmesser aufweisen, der zu einem Innendurchmesser des zweiten Hohlstrukturelements kongruent ist. Alternativ kann das erste Hohlstrukturelement einen Innendurchmesser aufweisen, der zu einem Außendurchmesser des zweiten Hohlstrukturelements kongruent ist.

Das erste Hohlstrukturelement kann auch als so genanntes Transition Piece bzw. Übergangsstück bezeichnet werden und das zweite Hohlstrukturelement als Einbindeelement. Insbesondere ist in einem Gründungszustand der Gründung das Einbindeelement mit einer bestimmten Einbindetiefe bzw. Einbindelänge (z.B. zwischen 7 und 20 m) in den Unterwasserboden eingebunden bzw. gegründet.

Das zweite Hohlstrukturelement umfasst insbesondere eine sich in Längsrichtung erstreckende, umlaufende zweite Wandung. Vorzugsweise ist in der zweiten Wandung keine Kabeldurchführung angeordnet.

Das erste Hohlstrukturelement weist insbesondere einen Übergangsabschnitt auf, der stirnseitig aus dem zweiten Hohlstrukturelement herausragt. Insbesondere kann ein (erstes und/oder zweites) Hohlstrukturelement bevorzugt monolithisch und rohrförmig gebildet sein und sich in einer Längsrichtung erstrecken. Diese Längsrichtung des ersten Hohlstrukturelements ist im Installationszustand bevorzugt kollinear mit der Längsrichtung des zweiten Hohlstrukturelements.

Das Transition Piece kann mindestens eine Schiffsanlandungseinrichtung mit Leiter aufweisen.

Der Vorteil einer Gründung, die aus zwei Hohlstrukturelementen gebildet und am Installationsort montierbar ist, ist insbesondere, dass das Gewicht eines zu transportierenden Hohlstrukturelements, insbesondere eines Pfahls, deutlich reduziert werden kann.

Das erste Hohlstrukturelement kann mittels einer Grout-Verbindung oder im Slip-Joint-Verfahren mit dem zweiten Hohlstrukturelement verbunden sein/werden.

Zwischen dem ersten und dem zweiten Hohlstrukturelement kann in einem ein- bzw. übergesteckten Zustand im Bereich des Überlappabschnitts des zweiten Hohlstrukturelements ein (umlaufender) Ringraum vorgesehen sein. Gemäß einer Ausführungsform des Offshore-Windenergiesystems kann in einem Ringraum zwischen der inneren Mantelfläche des zweiten Hohlstrukturelements und der äußeren Mantelfläche des ersten Hohlstrukturelements eine an den Mantelflächen anliegende Dichtung umlaufend angeordnet sein. Alternativ kann in einem Ringraum zwischen der äußeren Mantelfläche des zweiten Hohlstrukturelements und der inneren Mantelfläche des ersten Hohlstrukturelements eine an den Mantelflächen anliegende Dichtung umlaufend angeordnet sein. Insbesondere in Längsrichtung des ersten Hohlstrukturelements kann die Dichtung unterhalb der Kabeldurchführung angeordnet sein.

Alternativ oder zusätzlich kann, gemäß einer bevorzugten Ausführungsform des Offshore-Windenergiesystems ein Ringraum zwischen der inneren Mantelfläche des zweiten Hohlstrukturelements und der äußeren Mantelfläche des ersten Hohlstrukturelements zumindest teilweise vergroutet sein. Alternativ kann ein Ringraum zwischen der äußeren Mantelfläche des zweiten Hohlstrukturelements und der inneren Mantelfläche des ersten Hohlstrukturelements zumindest teilweise vergroutet sein. Eine Oberkante der Groutverbindung kann in Längsrichtung der Gründung zumindest unterhalb einer Unterkante der Kabeldurchführung angeordnet sein. Die Grout-Verbindung kann so hergestellt werden, dass diese vollständig unterhalb der Kabeldurchführungen im Überlappbereich ist. In diesem Fall kann die Dichtung vorzugsweise entfallen.

Wenn eine Dichtung vorgesehen ist, kann die Dichtung vorzugsweise expandierbar sein, derart, dass das Volumen der Dichtung nach der Montage der Hohlstrukturelemente vergrößerbar ist, insbesondere dass die Dichtung pneumatisch oder hydraulisch mit einem Füllmaterial beaufschlagt ist. Der Ringraum kann relativ schmal sein, insbesondere wenn keine Grout-Verbindung, sondern eine Slip-Joint-Verbindung, hergestellt wird. Beim Einführen des ersten Hohlstrukturelements in oder über das zweite Hohlstrukturelement kann nur eine geringe Toleranz erlaubt sein. Um zu verhindern, dass die Dichtung das Einführen des Übergangsstücks in das Hohlstrukturelement behindert oder beim Einführen beschädigt wird, kann die Dichtung expandierbar ist. Insbesondere ist die Dichtung so geformt, dass deren Volumen nach der Montage der Hohlstrukturelemente vergrößerbar ist. Die Dichtung kann beispielsweise aufgepumpt werden, sei es pneumatisch oder hydraulisch, indem sie mit einem Füllmaterial beaufschlagt wird. Im Inneren der Dichtung kann ein Volumen als Hohlraum vorgehalten werden. Dieses Volumen kann nach der Montage mit dem Füllmaterial unter Druck gefüllt werden, so dass die Dichtung den Ringspalt zwischen Hohlstrukturelement und Übergangsstück im Bereich der Kabeldurchführungen verschließt. Alternativ kann die Dichtung quellfähiges (z.B. tonhaltiges) Material aufweisen, welches bei Kontakt mit Wasser aufquillt.

Ferner können an einer oberen stirnseitigen Kante des zweiten Hohlstrukturelements angeordnete Einführhilfen mit an einer unteren stirnseitigen Kante des ersten Hohlstrukturelements angeordneten Einführhilfen zusammenwirken, derart, dass eine relative Ausrichtung der Azimutwinkel der Hohlstrukturelemente zueinander definiert ist. Die Einführhilfen können ineinandergreifende, radial nach innen und radial nach außen ragende Vorsprünge und Ausnehmungen sein. Hierdurch kann die Montage des ersten und zweiten Hohlstrukturelements vereinfacht werden.

Gemäß einer weiteren Ausführungsform, kann an der inneren Mantelfläche der Wandung in einem Einbindeabschnitt des zweiten Hohlstrukturelements mindestens ein radial nach innen weisender Anschlag gebildet sein. Insbesondere alternativ hierzu kann an der äußeren Mantelfläche der Wandung in einem Einbindeabschnitt des zweiten Hohlstrukturelements mindestens ein radial nach außen weisender Anschlag gebildet sein. In einem eingesteckten Zustand kann die untere Stirnseite des ersten Hohlstrukturelements auf dem mindestens einen Anschlag aufliegen.

Eine Wandung eines Hohlstrukturelements kann aus Metall gebildet sein, insbesondere Stahl. Gemäß einer bevorzugten Ausführungsform kann eine (erste und/oder zweite) Wandung eines (ersten und/oder zweiten) Hohlstrukturelements aus einem mineralischen Baustoff gebildet sein.

Gemäß einer Ausführungsform des anmeldungsgemäßen Offshore-Windenergiesystems kann der mineralische Baustoff zumindest in Teilen Zement enthalten. Der mineralische Baustoff ist vorzugsweise Beton, der aus Zement, Kies, Sand und Wasser angemischt ist und insbesondere nach dem Vergießen ausgehärtet ist.

Für eine gute Tragfähigkeit hat sich herausgestellt, dass der Wasser-Zement-Wert (w/z) des mineralischen Baustoffs kleiner als 0,45, insbesondere kleiner als 0,35 und insbesondere bevorzugt kleiner als 0,3 sein kann.

Die insbesondere bei Windkraftanlagen auftretenden Momente und Scherkräfte können durch das Hohlstrukturelement insbesondere dann ausreichend aufgenommen werden, wenn der Baustoff eine Festigkeitsklasse von zumindest C40/50, bevorzugt C70/85, insbesondere C100/115 nach EN 206 und EN1992 aufweist.

Eine über die Lebensdauer eines Offshore-Bauwerks, insbesondere einer Offshore-Windkraftanlage, ausreichende Langzeitstabilität der Gründung, insbesondere bei dauerhafter Penetration durch Wasser, kann insbesondere dadurch erreicht werden, dass der mineralische Baustoff einen Porengehalt (Luftporen) von weniger als 5 %, bevorzugt weniger als 3 %, insbesondere weniger als 2 % aufweist. Die Gesamtporosität gemessen mit Quecksilberdruckporosität sollte nach 28 Tagen P_{28d} < 12 Vol-% und nach 90 Tagen P_{90d} < 10 Vol-% sein.

Insbesondere bei einer dauerhaften Penetration von Wasser bei einer Installation der Gründung kann eine ausreichende Lebensdauer dadurch erreicht werden, dass der mineralische Baustoff bei einer Quecksilberdruckporosimetrischen Messung eine Porosität von P_{28d} < 12 Vol-% aufweist, wie bereits beschrieben wurde. P_{28d} ist eine Messung über 28 Tage. Die Porosität ist dabei bevorzugt auch kleiner als 10 Vol.-%. Bei P_{90d}, das heißt einer Messung über 90 Tage, ist die Porosität bevorzugt < 10 Vol.- %, insbesondere < 8 Vol.-%.

Eine ausreichende Tragfähigkeit der Gründung kann insbesondere dadurch erreicht werden, dass der mineralische Baustoff einen Zementgehalt von zumindest 350 kg/m³, bevorzugt zumindest 450 kg/m³, insbesondere bevorzugt zumindest 650 kg/m³ aufweist.

Ferner kann eine Wandung mechanisch vorgespannt sein. Durch die Vorspannung können Risse überdrückt und somit die Oberflächen weitestgehend frei von Zugspannung gehalten werden, was bei insbesondere schwankenden Drehmomentbelastungen vorteilhaft ist. Die Vorspannkraft ist dabei bevorzugt 5%, insbesondere mehr als 15% größer als die Druckfestigkeit der Gründungswandung. Die Vorspannkraft wird vorzugsweise in Längsrichtung aufgebracht.

Für eine noch höhere Stabilität, insbesondere bei dynamischen Umgebungsbedingungen, kann, gemäß einer weiteren Ausführungsform, der mineralische Baustoff (metallisch) armiert sein. Die metallische Armierung ist insbesondere eine Stahlarmierung. Die Armierung kann durch Fasern oder Armiereisen gegeben sein. Eine Faserarmierung kann auch durch Kohlefaser, Glasfaser oder Metallfaser erreicht werden.

Die Armierung kann so gebildet sein, dass diese bei 90% der Messstellen, bevorzugt bei 98% der Messstellen, zumindest als 26 mm, bevorzugt zumindest als 40 mm Betondeckung aufweist.

Der mineralische Baustoff kann mit ferritisch nichtrostendem Betonstahl armiert sein. Die Armierung kann einen Chromgehalt von 18 M% nicht überschreiten. Die Armierung kann Molybdänbestanteile aufweisen.

Der mineralische Baustoff kann mit austenitisch nichtrostendem Betonstahl armiert sein. Die Armierung kann zumindest 5 M% aufweisen, insbesondere zwischen 5 M% bis 14 M% Nickel und/oder zwischen 12 M% bis 22 M%, insbesondere 15 M% bis 20 M% Chrom.

Der mineralische Baustoff kann mit ferritisch-austenitisch nichtrostendem Betonstahl armiert sein. Die Armierung kann zumindest 18 M%, insbesondere zwischen 15 M% - 20 M% Chrom und 2 M% - 8 M% Nickel und optional Molybdän aufweisen.

Für eine erhöhte Standfestigkeit wird vorgeschlagen, dass der mineralische Baustoff versiegelt sein kann, insbesondere mit einer Dichtungsfolie. Eine solche Dichtungsfolie kann beispielsweise eine Aluminium-Butyl-Dichtfolie sein.

Gemäß einer weiteren Ausführungsform des Offshore-Windenergiesystems kann die Kabelführungsanordnung mindestens ein (Kabel-) Stützelement umfassen, eingerichtet zumindest zur vertikalen Stützung des Seekabels. Indem mindestens ein Stützelement mit einer vertikalen Stützfunktion bereitgestellt wird, das das Seekabel zumindest in eine vertikale Richtung stützt, kann bereits eine signifikante Belastungsreduktion für das Seekabel erzielt werden. Eine vertikale Stützung meint insbesondere, dass die Bewegungsfreiheit des Seekabels nach unten und/oder oben eingeschränkt ist.

Darüber hinaus kann, gemäß einer bevorzugten Ausführungsform des Offshore-Windenergiesystems, sich eine Höhe (in Bezug zur Unterwasserbodenoberfläche) des mindestens einen Stützelements in radialer Richtung (ausgehend von der äußeren Mantelfläche) stufenförmig oder stetig reduzieren. Vorzugsweise kann mindestens ein keil- bzw. rampenförmiges Stützelement vorgesehen sein, welches sich in einer radialen Richtung erstreckt. Die Höhe des keil- bzw. rampenförmigen Stützelements kann sich vorzugsweise stetig reduzieren. Beispielsweise kann eine untere Oberfläche (insbesondere ein Fußabschnitt) des keil- bzw. rampenförmigen Stützelements im Wesentlichen waagerecht bzw. horizontal sein und die obere Oberfläche (insbesondere ein Kopfabschnitt) eine schräg verlaufende Fläche sein. Die untere Oberfläche kann in einem Installationszustand die Unterwasserbodenoberfläche kontaktieren oder sogar in dem Unterwasserboden eingebunden sein. Die obere Oberfläche kann das Seekabel tragen und zumindest in eine vertikale Richtung stützen.

Ferner kann eine Mehrzahl von einzelnen Stützelementen (beispielsweise in Form von einer Mehrzahl an Falllanzen) vorgesehen sein, wobei sich die Mehrzahl der Stützelemente einer Kabelführungsanordnung in eine radiale Richtung erstrecken. Bei einer Mehrzahl von einzelnen Stützelementen kann sich die Höhe der in radialer Richtung angeordneten Stützelemente nach und nach bzw. stufenförmig, also von Stützelement zu Stützelement, reduzieren.

Die Höhe meint vorliegend insbesondere den Abstand zwischen dem das Seekabel kontaktierenden Teils (beispielsweise die obere Oberfläche) des mindestens einen Stützelements und der Unterwasserbodenoberfläche (bei Annahme einer nahezu planen Unterwasserbodenoberfläche über die gesamte radiale Erstreckungsrichtung der Kabelführungsanordnung).

Grundsätzlich kann das mindestens eine Stützelement aus einem beliebigen Material gebildet und eine beliebige Form haben, so lange sichergestellt ist, dass das mindestens eine Stützelement das Seekabel von der Kabeldurchführung zur Unterwasserbodenoberfläche zumindest vertikal gestützt führt. Beispielsweise kann das mindestens eine Stützelement durch Schüttgut gebildet sein. Das Schüttgut kann an einer Außenwand rampenförmig aufgeschüttet sein. Das Seekabel kann dann auf das Schüttgut abgelegt und durch die gebildete obere Oberfläche des Schüttgutstützelements geführt sein. Das Schüttgut kann insbesondere eine hinreichend große (durchschnittliche) Korngröße aufweisen, die insbesondere ein Auskolken des Seekabels und/oder ein Abtragen des Schüttgutstützelements infolge der vorherrschenden Meeresströmung verhindert.

Die durchschnittliche Korngröße kann zwischen 1 mm und 5000 mm liegen. Bevorzugt kann durchschnittliche Korngröße zwischen mindestens 200 mm und 5000 mm liegen, weiter bevorzugt zwischen mindestens 1000 mm und 5000 mm.

Gemäß einer bevorzugten Ausführungsform des Offshore-Windenergiesystems kann das mindestens eine Stützelement ein Betonfertigbauteil sein. Insbesondere kann das Betonfertigbauteil vorgefertigt sein, insbesondere aus einem zuvor beschriebenen mineralischen Baustoff. Das mindestens eine Betonfertigbauteil kann dann neben der Gründung (ausgerichtet zur Kabeldurchführung) angeordnet werden, insbesondere abgesenkt werden. Eine einfache Installation des Offshore-Windenergiesystems ist möglich.

Vorzugsweise kann ein vorbeschriebenes keil- bzw. rampenförmiges Stützelement ein einzelnes (einstückiges) Betonfertigbauteil sein. Auch kann ein derartiges Stützelement aus einer Mehrzahl von Betonfertigbauteilen gebildet sein.

Bei anderen Varianten kann das mindestens eine Stützelement auch ein Metallfertigbauteil sein, wie ein Stahlfertigbauteil.

Gemäß einer weiteren Ausführungsform des Offshore-Windenergiesystems kann das mindestens eine Stützelement eine an dem Unterwasserseeboden verankerbare Seilspannungsanordnung sein. Insbesondere kann eine Mehrzahl von verankerbaren Seilspannungsanordnungen als Kabelführungsanordnung in einer radialen Richtung hintereinander angeordnet sein. Ein Seil oder eine Kette einer Seilspannungsanordnung kann über das zu führende Seekabel positioniert sein. Die Enden des Seils bzw. der Kette können in dem Unterwasserseeboden (beispielsweise durch geeignete Anker) verankert sein, insbesondere derart, dass das Seil bzw. die Kette über dem Seekabel verspannt ist. Durch die Verspannung kann eine zumindest in vertikale Richtung (insbesondere in Richtung Unterwasserbodenoberfläche) wirkende Kraft auf das Seekabel ausgeübt werden. Hierdurch kann das Seekabel zumindest in vertikale Richtung gestützt werden. An dem Seekabel können Kabelfixiermodule (beispielsweise Manschetten) angeordnet sein, um das Seil bzw. die Kette an dem Seekabel zu fixieren.

Wie bereits beschrieben wurde, kann eine Mehrzahl von Seilspannungsanordnungen angeordnet sein, wobei die Länge des Seils bzw. der Kette, ausgehend von der äußeren Mantelfläche der ersten Wandung, in radialer Richtung (in einem verankerten und insbesondere verspannten Zustand) sich reduzieren kann. Die Länge ist insbesondere die Länge zwischen den beiden Ankern (unter der Annahme, dass sämtliche Anker gleich tief eingegraben sind).

Gemäß einer bevorzugten Ausführungsform des Offshore-Windenergiesystems kann das mindestens eine Stützelement eine Kabelaufnahme zum Führen des Seekabels aufweisen. Die Form der Kabelaufnahme kann insbesondere zu der (Außen-) Form des Seekabels korrespondieren. Indem eine derartige Kabelaufnahme vorgesehen ist, kann das Seekabel sicher geführt und insbesondere in vertikaler Richtung, vorzugsweise auch in horizontaler Richtung, gestützt werden.

Besonders bevorzugt kann die Kabelaufnahme eine kanalartige und in eine radiale Richtung verlaufende Vertiefung in einer oberseitigen Oberfläche des mindestens einen Stützelements sein. Wenn die Kabelführungsanordnung durch eine Mehrzahl von Stützelementen gebildet ist, kann vorzugsweise jedes Stützelement eine derartige Vertiefung aufweisen. Die Stützelemente können so aufgestellt sein, dass die jeweiligen Vertiefungen zueinander ausgerichtet sind.

Insbesondere kann ein (Innen-) Durchmesser der Vertiefung zumindest größer sein als ein Außendurchmesser des Seekabels.

Vorzugsweise kann die kanalartige Vertiefung einen ¾ Kreis (Querschnittsansicht) mit Kabelöffnung bilden, entweder als nach oben geöffneter durchgehender Schlitz oder mit einer am von dem Hohlstrukturelement entfernten Ende angeordneten Öffnung mit einer Breite, die größer ist als der Kabeldurchmesser, vorzugsweise Kabeldurchmesser plus 5 mm, insbesondere bevorzugt Kabeldurchmesser plus 20 mm.

Für eine noch weitere Reduzierung der Belastung des Seekabels - auch bei starken Strömungen - kann, gemäß einer bevorzugten Ausführungsform des Offshore-Windenergiesystems, die Kabelführungsanordnung mindestens ein Kabelfixiermodul umfassen. Das mindestens eine Kabelfixiermodul kann eingerichtet sein zum Fixieren des Seekabels an der Kabelführungsanordnung. Insbesondere kann das mindestens eine Kabelfixiermodul mit dem mindestens einen Stützelement zusammenwirken, derart, dass das Seekabel an dem Stützelement fixiert wird, insbesondere noch weiter in der Bewegungsfreiheit beschränkt wird.

Vorzugsweise kann das mindestens eine Kabelfixiermodul ein Klippmechanismus (insbesondere mindestens eine Klammer) sein. Ein Klippmechanismus ermöglicht insbesondere ein Festklammern des Seekabels an dem mindestens einen Stützelement. Ein Klippmechanismus ist insbesondere in einfacher Weise zu installieren.

Alternativ oder zusätzlich kann das mindestens eine Kabelfixiermodul ein Verfüllbaustoff sein, insbesondere ein Kabelzement (z.B. CableCem^{®}). Durch die Verwendung eines mineralischen Verfüllbaustoffs kann das Seekabel sicher fixiert werden. Ein weiterer Vorteil eines Verfüllbaustoffs, insbesondere eines Kabelzements, ist die gute Wärmeleitfähigkeit. Der geringe thermische Widerstand von einem Kabelzement sorgt insbesondere für eine exzellente Wärmeableitung und damit für einen geringeren Energieverlust im Kabelstrang.

Bevorzugt kann bei einem Schüttgutstützelement für eine sichere Fixierung des Seekabels ein Verfüllbaustoff (z.B. aus Grauguß) verwendet werden.

Ein weiterer Aspekt der Erfindung ist ein Offshore-Bauwerk, insbesondere ein Offshore-Windenergiebauwerk. Das Offshore-Bauwerk ist gemäß Anspruch 14.

In der Zeichnung zeigt
- Fig. 1: eine schematische Ansicht eines Ausführungsbeispiels eines OffshoreBauwerks mit einem Ausführungsbeispiel eines Offshore-Windenergiesystems gemäß der Erfindung,
- Fig. 2: eine schematische Ansicht eines weiteren Ausführungsbeispiels eines Offshore-Windenergiesystems,
- Fig. 2a: eine schematische Ansicht eines Ausführungsbeispiels einer in dem Ausführungsbeispiel nach Figur 2 eingesetzten Kabelführungsanordnung,
- Fig. 2b: eine schematische Ansicht eines weiteren Ausführungsbeispiels einer in dem Ausführungsbeispiel nach Figur 2 eingesetzten Kabelführungsanordnung,
- Fig. 3: eine schematische Ansicht eines weiteren Ausführungsbeispiels eines Offshore-Windenergiesystems gemäß der vorliegenden Erfindung,
- Fig. 4: eine schematische Ansicht eines weiteren Ausführungsbeispiels,
- Fig. 5: eine schematische Ansicht eines weiteren Ausführungsbeispiels eines Offshore-Windenergiesystems.

Nachfolgend werden für gleiche Elemente gleiche Bezugszeichen verwendet. Ferner bezeichnet z nachfolgend die vertikale Achse bzw. Richtung und r die radiale Richtung. Darüber hinaus beziehen sich die Ausdrücke "unten", "unteren" etc. und "oben", "oberen" etc. insbesondere auf die vertikale Achse z und insbesondere auf den Installationszustand der Gründung bzw. des Offshore-Bauwerks.

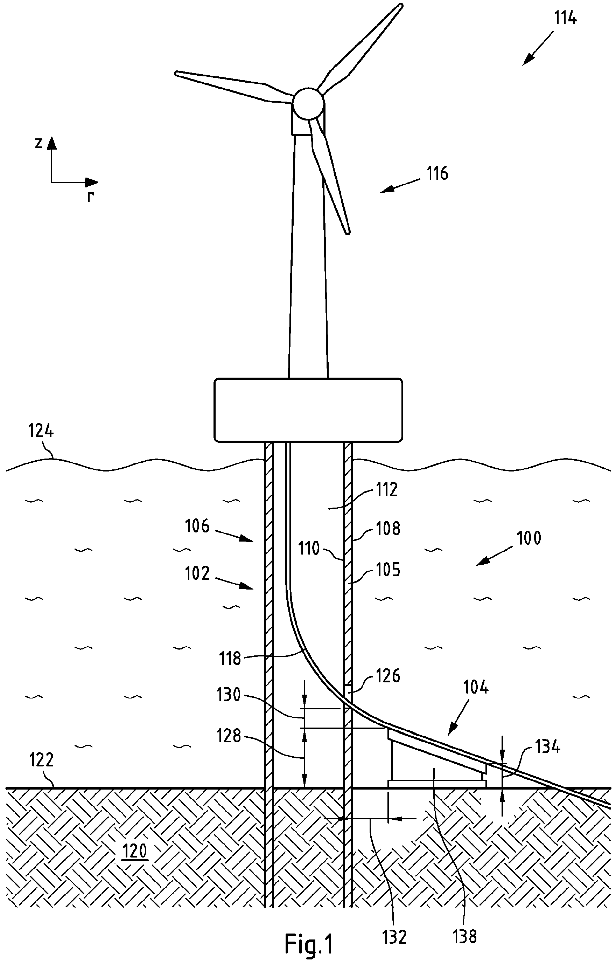

Die Figur 1 zeigt eine schematische Ansicht eines Ausführungsbeispiels eines Offshore-Bauwerks 114 mit einem Ausführungsbeispiel eines Offshore-Windenergiesystems 100 gemäß der vorliegenden Erfindung.

Als Offshore-Bauwerk 114 ist vorliegend beispielhaft ein Offshore-Windenergiebauwerk 114 in Form einer Offshore-Windkraftanlage 114 dargestellt. Vorliegend sind das Offshore-Bauwerk 114 und damit eine Gründung 102 des Offshore-Bauwerks 114 in einem Installationszustand dargestellt. Die nachfolgenden Ausführungen lassen sich in einfacher Weise auf andere Offshore-Bauwerke übertragen.

Das Offshore-Bauwerk 114 umfasst mindestens ein Offshore-Windenergiesystem 100 und mindestens eine Offshore-Einrichtung 116 (vorliegend z.B. Turm, Rotor, Generator etc.). Insbesondere ist an die Offshore-Einrichtung 116 ein Seekabel 118 angeschlossen, um insbesondere die generierte elektrische Energie bzw. den generierten elektrischen Strom zu einer weiteren Entität zu transportieren.

Ein Seekabel 118 ist vorliegend insbesondere ein Energiekabel, insbesondere ein Mittelspannungskabel 118 mit einer Leistungskapazität zwischen 3 MW und 70 MW, vorzugsweise zwischen 9 MW und 60 MW, oder ein Hochspannungskabel 118 mit einer Leistungskapazität zwischen 70 MW und 2,5 GW, vorzugsweise zwischen 360 MW und 1500 MW.

Das Offshore-Windenergiesystem 100 umfasst eine Gründung 102 und eine Kabelführungsanordnung 104, die benachbart zu der Gründung 102 angeordnet ist.

Die Gründung 102 umfasst vorliegend ein erstes Hohlstrukturelement 106 bzw. eine erste turmförmige Gründungsstruktur 106. Das erste Hohlstrukturelement 106 umfasst eine sich in Längsrichtung (also entlang der Längsachse des Hohlstrukturelements 106) erstreckende, umlaufende erste Wandung 105.

Die erste Wandung 105 ist am unteren Ende des ersten Hohlstrukturelements 106 unterseitig mit einer unterseitigen Stirnfläche begrenzt. Am oberen Ende des ersten Hohlstrukturelements 106 ist die erste Wandung durch eine oberseitige Stirnfläche begrenzt.

Vorzugsweise weist das erste Hohlstrukturelement 106 eine kreisförmige Querschnittsfläche auf. Bei anderen Varianten kann auch eine andere Querschnittsform vorgesehen sein, wie eine elliptische oder ovale. Insbesondere kann das erste Hohlstrukturelement 106 als Hohlpfahl 106 mit einem Innenraum 112 gebildet sein. Durch den Innenraum 112 kann das Seekabel 118 nach unten geführt sein, insbesondere in dem Innenraum 112 frei hängend angeordnet sein.

Die erste Wandung 105 weist eine innere Mantelfläche 110 bzw. Innenwand 110 und eine äußere Mantelfläche 108 bzw. Außenwand 108 auf. Die Innenseite 110 ist in Richtung des Innenraums 112 gewandt, während die äußere Mantelfläche 108 nach außen gerichtet ist.

Anders ausgedrückt, eine Wandung ist insbesondere begrenzt durch eine Innenwand und eine Außenwand bzw. durch einen Innendurchmesser und einen Außendurchmesser. Die Wandung ist insbesondere die äußere Begrenzung eines Hohlstrukturelements.

Wie bereits beschrieben wurde, zeigt die Figur 1 die Gründung 102 in einem Installationszustand, in dem ein Einbindeende des mindestens einen Hohlstrukturelements 106 in dem Unterwasserboden 120 (Bezugszeichen 122 bezeichnet die Unterwasserbodenoberfläche) gegründet ist, also in dem Unterwasserboden 120 mit einer bestimmten Tiefe bzw. Einbindelänge (z.B. zwischen 7 m und 20 m) eingebunden ist. Das erste Hohlstrukturelement 106 ragt vorliegend über die Wasseroberfläche 124 hinaus.

Die erste Wandung 105 ist vorzugsweise aus Beton hergestellt (wie zuvor beschrieben wurde), insbesondere aus Beton gegossen.

Wie aus der Figur 1 zu erkennen ist, bleibt die Wandstärke bzw. Wanddicke in Längsrichtung (z) über die gesamte Länge des ersten Hohlstrukturelements 106 konstant bzw. unverändert. Bei anderen Varianten kann sich die Wandstärke eines Hohlstrukturelements auch ändern. Beispielsweise kann sich die Wandstärke von der oberseitigen Stirnfläche zur unterseitige Stirnfläche verjüngen, beispielsweise indem sich der Innendurchmesser vergrößert und der Außendurchmesser konstant bleibt oder der Außendurchmesser sich reduziert und der Innendurchmesser konstant bleibt.

Um das Seekabel von dem Innenraum 112 nach außen zu führen (bzw. in umgekehrte Richtung) ist in der ersten Wandung 105 eine die erste Wandung 105 durchbrechende Kabeldurchführung 126 angeordnet. Durch die Kabeldurchführung 126 kann das Seekabel 118 nach außen austreten.

Das Offshore-Windenergiesystem 100 umfasst mindestens eine sich in radiale Richtung r (und im Installationszustand horizontale Richtung) ersteckende und an der äußeren Mantelfläche 108 der ersten Wandung 105 des ersten Hohlstrukturelements 106 angeordnete Kabelführungsanordnung 104, eingerichtet zum Führen des aus der Kabeldurchführung 126 austretenden Seekabels 118 von der Kabeldurchführung 126 zu einer Unterwasserbodenoberfläche 122 des Unterwasserbodens 120.

Die Kabelführungsanordnung 104 umfasst vorliegend ein Stützelement 138. Das vorliegend rampenförmig gebildete Stützelement 138 ist insbesondere eingerichtet zur vertikalen Stützung des Seekabels 118, also zur Beschränkung der Bewegungsfreiheit des Seekabels 118 zumindest in vertikaler Richtung z.

Insbesondere wird das ausgetretene bzw. herausgeführte Seekabel 118 durch die obere (schräge) Oberfläche des Stützelements 138 von der Kabeldurchführung 126 zu einer Unterwasserbodenoberfläche 122 des Unterwasserbodens 120 geführt und nach unten hin gestützt.

Vorzugsweise kann das mindestens eine Stützelement 138 von der äußeren Mantelfläche 108 radial beabstandet sein. Anders ausgedrückt, kontaktiert ein Stützelement vorzugsweise (grundsätzlich) weder das erste noch das zweite Hohlstrukturelement.

Der radiale Abstand 132 kann zwischen der äußeren Mantelfläche 108 und dem der äußeren Mantelfläche zugewandten Ende des Stützelements 138 beispielsweise zwischen 0,2 m und 4 m liegen, vorzugsweise zwischen 0,5 m und 2 m.

Wie ferner zu erkennen ist, ist das obere Ende des Stützelements 138 vorzugsweise vertikal beabstandet zu der unteren Kante der Kabeldurchführung 126. Der vertikale Abstand 130 zwischen der unteren Kante der Kabeldurchführung 126 und dem oberen Ende (bzw. dem höchsten vertikalen Punkt) des Stützelements 138 kann zwischen 0,5 m und 2 m liegen.

Die Dimensionierung der Abstände 130, 132 hängt insbesondere von dem zulässigen Biegeradius des Seekabels 118 ab. Zudem kann auch die maximale Höhe 134 des Stützelements 138 und/oder die Steigung der Rampe des Stützelements 138 von dem Biegeradius des Seekabels 118 abhängen. Vorliegend weist das von der Außenwand 108 abgewandte Ende des Stützelements 138 eine vertikale Höhe 136 auf, die zwischen 0 m und 7,5 m liegen kann.

Bevorzugt liegt die Kabeldurchführung 126 des ersten Hohlstrukturelements 106 in dem dargestellten Installationszustand der Gründung 102 zumindest über 5 m oberhalb der Unterwasserbodenoberfläche 122, insbesondere über 6 m, insbesondere bevorzugt zwischen 8 m und 12 m. Anders ausgedrückt kann der vertikale Abstand zwischen der Unterwasserbodenoberfläche 122 und der Kabeldurchführung 126, insbesondere Unterkante der Kabeldurchführung 126, mehr als 5 m betragen, vorzugsweise mehr als 6 m, insbesondere bevorzugt zwischen 8 m und 12 m liegen. Darüber hinaus reduziert sich im vorliegenden Ausführungsbeispiel die Höhe des mindestens einen Stützelements 238 in radialer Richtung von dem der äußeren Mantelfläche 108 zugewandten Ende des Stützelements 238 zu dem von der äußeren Mantelfläche 108 wegweisenden Ende des Stützelements 238 stetig.

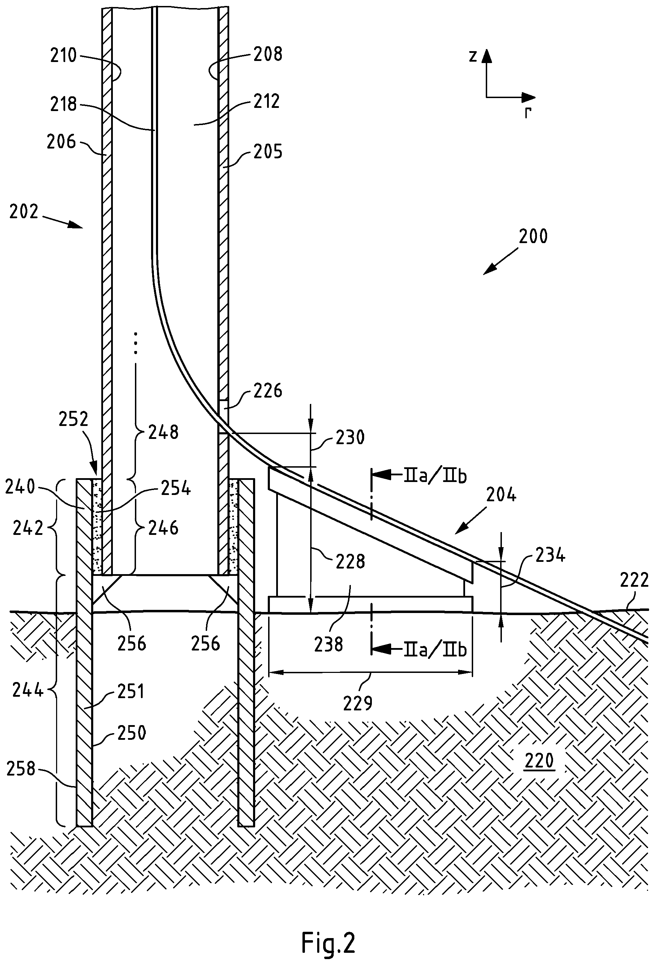

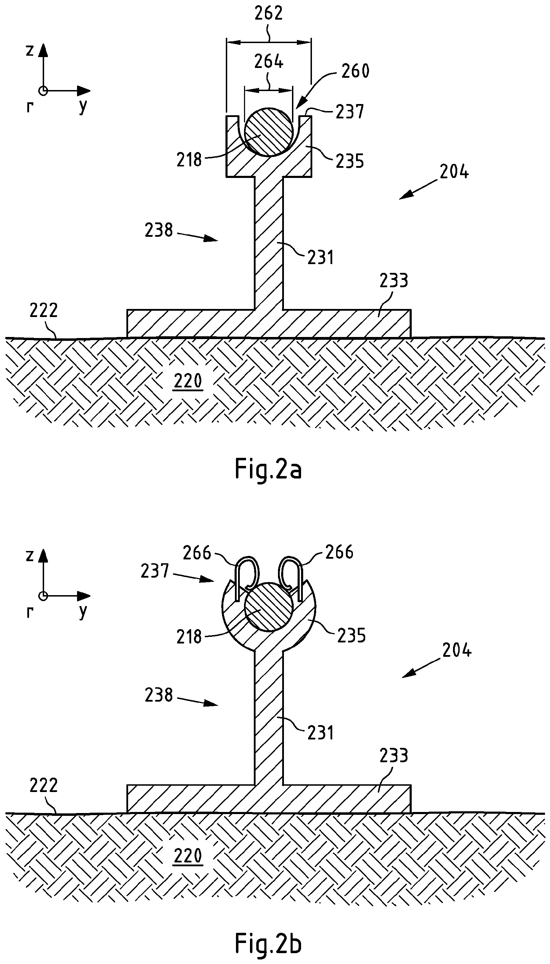

Die Figuren 2 bis 2b zeigen schematische Ansichten eines weiteren Ausführungsbeispiels eines Offshore-Windenergiesystems 200 für ein Offshore-Bauwerk. Zur Vermeidung von Wiederholungen werden nachfolgend im Wesentlichen nur die Unterschiede zu dem vorhergehenden Ausführungsbeispiel beschrieben und ansonsten auf die Ausführungen zur Figur 1 verwiesen.

Die Gründung 202 umfasst ein erstes Hohlstrukturelement 206 und ein zweites Hohlstrukturelement 240. Das erste (insbesondere zylinderförmige) Hohlstrukturelement 206 kann auch als Übergangsstück 206 bzw. Transition Piece 206 und das zweite (insbesondere zylinderförmige) Hohlstrukturelement 240 als Einbindeelement 240 bezeichnet werden.

Das zweite Hohlstrukturelement 240 umfasst einen Überlappabschnitt 242 und einen Einbindeabschnitt 244. Der Einbindeabschnitt 244 ist zumindest teilweise in den Unterwasserboden 220 eingebunden.

Der Überlappabschnitt 242 des zweiten Hohlstrukturelements 240 überlappt mit einem Endabschnitt 246 bzw. weiteren Überlappabschnitt 246 des ersten Hohlstrukturelements 206 (in einem Überlappbereich der Gründung). Wie insbesondere zu erkennen ist, ist das erste Hohlstrukturelement 206 in das zweite Hohlstrukturelement 240 eingesteckt. Insbesondere liegt die unterseitige Stirnfläche des ersten Hohlstrukturelements 206 auf mindestens einem (umlaufenden) und radial nach innen ragenden Anschlag 256 auf. Der mindestens eine Anschlag 256 kann beispielsweise an einer Innenseite 250 einer zweiten (umlaufenden und sich in eine Längsrichtung z erstreckenden) Wandung 251 befestigt sein, beispielsweise angeschweißt sein.

Im Überlappbereich bildet sich vorliegend zwischen der inneren Mantelfläche 250 des zweiten Hohlstrukturelements 240 und der äußeren Mantelfläche 208 des ersten Hohlstrukturelements 206 ein Ringraum 252. Wie eingangs bereits erläutert, wird der Ringraum 252 im Falle der dargestellten Grout-Verbindung mit Füllmaterial 254, insbesondere ein Grout (Mörtel), gefüllt, insbesondere vergroutet. Das Füllmaterial 254 wird in den Ringraum 252 eingebracht, nachdem das erste Hohlstrukturelement 206 in das Hohlstrukturelement 240 eingesteckt wurde.

An den Endabschnitt 246 bzw. Überlappabschnitt 246 schließt sich der Übergangsabschnitt 248 an. Das Transition Piece 206 ragt insbesondere aus dem zweiten Hohlstrukturelement 240 mit dem Übergangsabschnitt 248 heraus.

Bei Varianten kann alternativ oder zusätzlich in dem Ringraum eine (expandierbare) Dichtung angeordnet sein. Ferner kann bei Varianten mindestens eine Einführhilfe, Ausrichthilfe oder dergleichen für eine Ausrichtung der Hohlstrukturelemente zueinander vorgesehen sein.

Ferner umfasst das Offshore-Windenergiesystem 200 vorliegend eine Kabelführungsanordnung 204 mit einem (einzelnen) rampenförmigen Stützelement 238. Das Stützelement 238 kann vorzugsweise ein Betonfertigbauteil 238 sein. Eine Schnittansicht eines ersten Ausführungsbeispiels der Kabelführungsanordnung 204 ist in Figur 2a dargestellt und ein weiteres Ausführungsbeispiel der Kabelführungsanordnung 204 ist in Figur 2b dargestellt.

Das insbesondere einstückig gebildete Stützelement 238 kann einen Fußabschnitt 233, einen Kopfabschnitt 235 mit einer oberen Oberfläche 237 und einen den Fußabschnitt 233 und den Kopfabschnitt 235 verbindenden Verbindungsabschnitt 231 umfassen. Das Stützelement 238 kann insbesondere mittels des Fußabschnitts 233 auf der Unterwasserbodenoberfläche 222 abgestellt sein.

Vorzugsweise kann in dem Stützelement 238, insbesondere in dem Kopfabschnitt 235, eine Kabelaufnahme 260 zum Führen des Seekabels 218 vorgesehen sein. Wie zu erkennen ist, korrespondiert die Form der Kabelaufnahme 260 insbesondere zu der Form des Seekabels 218.

Das dargestellte Stützelement 238 stützt das Seekabel 218 zumindest in eine vertikale Richtung. Insbesondere ist zumindest die Bewegungsfreiheit nach unten (Richtung Unterwasserbodenoberfläche 222) durch das mindestens eine Stützelement 238 beschränkt.

Die Kabelaufnahme 260 ist vorliegend eine kanalartige und in eine radiale Richtung r (vorzugsweise entlang der gesamten Länge 229 des Stützelements 238) verlaufende Vertiefung 260, die in der oberseitigen Oberfläche 237 des Stützelements 238 gebildet ist. Der Durchmesser 262 der Vertiefung 260 kann zumindest größer sein als ein Außendurchmesser 264 des Seekabels 218.

Im Unterschied zur Figur 2a ist der Durchmesser 262 der Vertiefung 260 geringer und entspricht nahezu dem Außendurchmesser 264 des Seekabels 218. Zudem hat die Vertiefung 260 in einer Querschnittsansicht bei dem Ausführungsbeispiel nach Figur 2b die Form eines ¾ Kreises, während in der Figur 2a eine halbkreisförmige Form vorgesehen ist.

Für eine sichere Fixierung des Seekabels 218 kann optional mindestens ein Kabelfixiermodul 266 vorgesehen sein (vgl. Fig. 2b), eingerichtet zum Fixieren des Seekabels 218 an der Kabelführungsanordnung 204, insbesondere an dem mindestens einen Stützelement 238. In Figur 2b ist insbesondere ein Klippmechanismus 266 vorgesehen, vorliegend in Form von zwei Klammern 266. Beispielsweise wäre bei der Ausführungsform nach Figur 2a denkbar, nach (oder auch vorher) einer Anordnung des Seekabels 218 in der Aufnahme 260 das Seekabel und die Aufnahme mit einem (nicht gezeigten) Verfüllbaustoff zu vergießen, insbesondere einem Kabelzement.

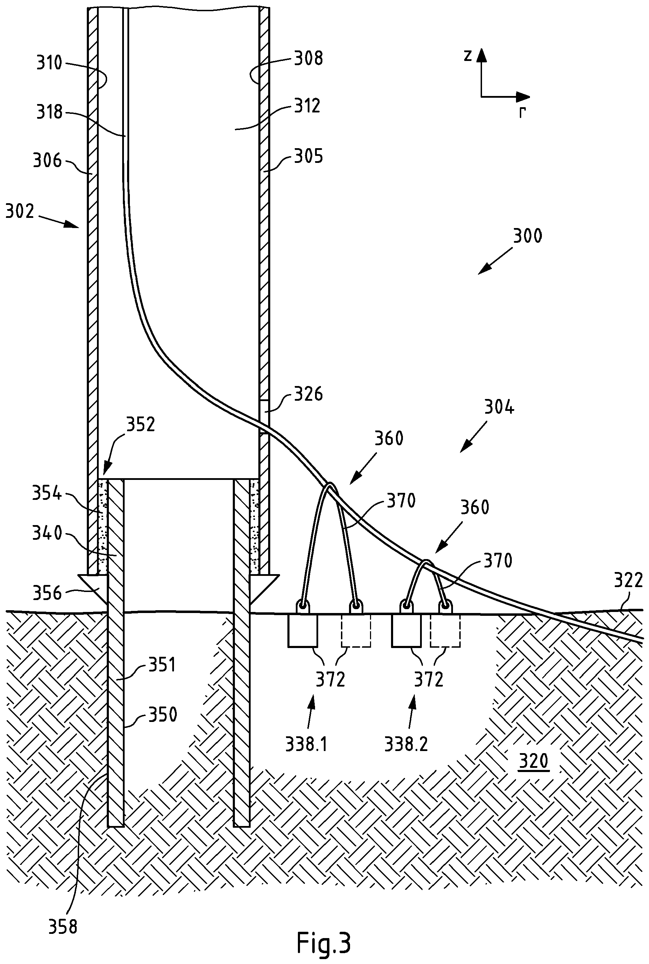

Die Figur 3 zeigt eine schematische Ansicht eines weiteren Ausführungsbeispiels eines Offshore-Windenergiesystems 300 für ein Offshore-Bauwerk. Zur Vermeidung von Wiederholungen werden nachfolgend im Wesentlichen nur die Unterschiede zu den vorhergehenden Ausführungsbeispielen, beschrieben und ansonsten auf die Ausführungen zu den Figuren 1 bis 2b verwiesen. Zunächst ist vorliegend ein Ringraum 352 zwischen der äußeren Mantelfläche 358 des zweiten Hohlstrukturelements 340 und der inneren Mantelfläche 310 des ersten Hohlstrukturelements 306 gebildet. Der Ringraum 352 ist beispielhaft mit Grout 354 (Mörtel) verfüllt. Wie zu erkennen ist, ist an der äußeren Mantelfläche 358 der zweiten Wandung 351 in einem Einbindeabschnitt 344 des zweiten Hohlstrukturelements 340 mindestens ein radial nach außen weisender Anschlag 356 gebildet.

Die Kabelführungsanordnung 304 umfasst eine Mehrzahl von Stützelementen 338.1, 338.2 (vorliegend sind zu Gunsten einer besseren Übersicht beispielhaft lediglich zwei Stützelemente 338.1, 338.2 dargestellt). Wie zu erkennen ist, haben die Stützelemente 338.1, 338.2 eine(n) unterschiedliche(n) Höhe bzw. Abstand zur Unterwasserbodenoberfläche 322. Anders ausgedrückt, reduziert sich im vorliegenden Ausführungsbeispiel die Höhe der Stützelemente 338.1, 338.2 in radialer Richtung von dem ersten Stützelement 338.1 zu dem letzten Stützelement 338.2 stufenförmig. Insbesondere sind unterschiedliche Seillängen vorgesehen.

Das mindestens eine Stützelement 338.1, 338.2 ist vorliegend eine an dem Unterwasserseeboden 320 verankerbare Seilspannungsanordnung 338.1, 338. Eine Seilspannungsanordnung 338.1, 338.2 umfasst ein Seil 370 (oder eine Kette), dessen (deren) Enden jeweils mit einem zumindest teilweise in dem Unterwasserseeboden 320 eingegrabenen Anker 372 verbunden sind.

Ein Seil 370 einer Seilspannungsanordnung 338.1, 338.2 wird über das Seekabel 318 derart gespannt, dass das Seekabel 318 zumindest in einer vertikalen Richtung gestützt wird. Insbesondere wirkt durch das verspannte Seil 370 eine Kraft (angedeutet durch den Pfeil) auf das Seekabel 318. Das Seekabel 318 kann hierdurch sicher von der Kabeldurchführung 326 zu der Unterwasserbodenoberfläche 322 geführt werden.

Zur Fixierung des Seekabels 318 an einem Stützelement 338.1, 338.2 kann optional mindestens ein (nicht gezeigtes) Kabelfixiermodul vorgesehen sein, wie ein Klipp- bzw. Klammermechanismus. Zusätzlich kann ein Seekabel 318 über (gleichmäßig) beabstandete fest montierte (nicht gezeigte) Kabelfixiermodule verfügen, an denen ein Seil fixiert werden kann. Beispielsweise können an dem Seekabel Manschetten vorgesehen sein.

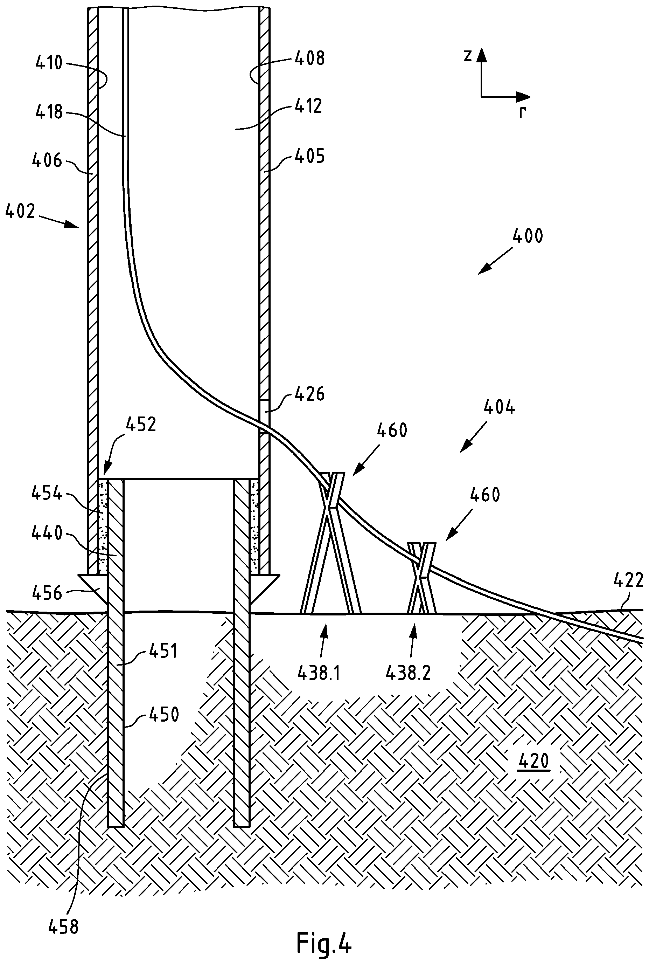

Die Figur 4 zeigt eine schematische Ansicht eines weiteren Ausführungsbeispiels eines Offshore-Windenergiesystems 400 für ein Offshore-Bauwerk. Zur Vermeidung von Wiederholungen werden nachfolgend im Wesentlichen nur die Unterschiede zu den vorhergehenden Ausführungsbeispielen beschrieben und ansonsten auf die Ausführungen zu den Figuren 1 bis 3 verwiesen.

Im Gegensatz zur Figur 3 sind vorliegend eine Mehrzahl von Stützelementen 438.1, 438.2 (vorliegend sind zu Gunsten einer besseren Übersicht beispielhaft lediglich zwei Stützelemente 438.1, 438.2 dargestellt) mit einer kanalartigen Vertiefung 460 als Kabelaufnahme 460 angeordnet. Ein Stützelement 438.1, 438.2 kann fest im Unterwasserboden 420 verankert sein.

Wie zu erkennen ist, haben die Stützelemente 438.1, 438.2 eine(n) unterschiedliche(n) Höhe bzw. Abstand zur Unterwasserbodenoberfläche 422. Anders ausgedrückt, reduziert sich im vorliegenden Ausführungsbeispiel die Höhe der Stützelemente 438.1, 438.2 in radialer Richtung von dem ersten Stützelement 438.1 zu dem letzten Stützelement 438.2 stufenförmig.

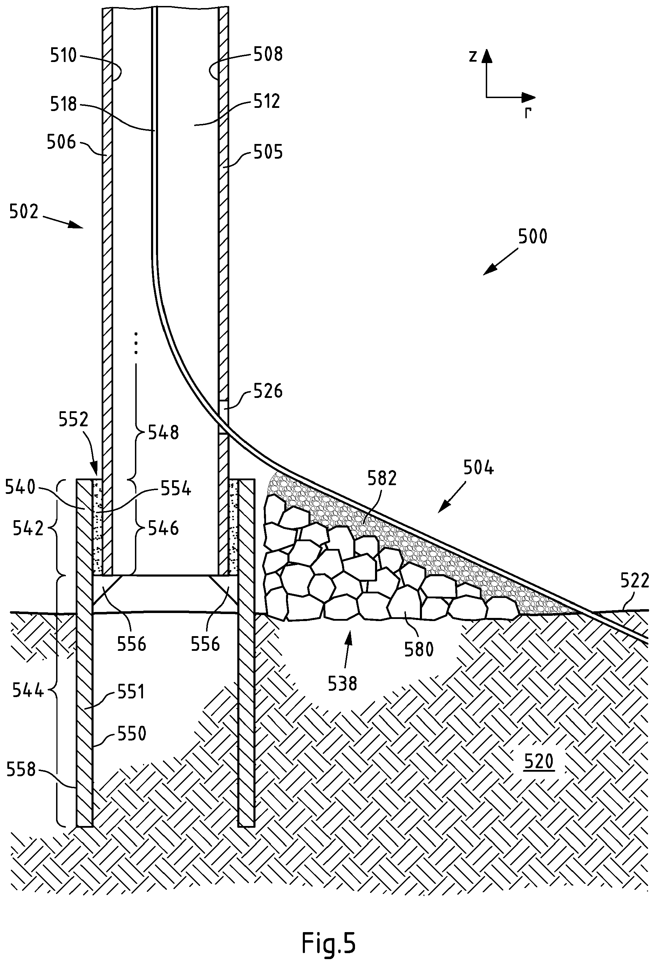

Die Figur 5 zeigt eine schematische Ansicht eines weiteren Ausführungsbeispiels eines Offshore-Windenergiesystems 400 für ein Offshore-Bauwerk Zur Vermeidung von Wiederholungen werden nachfolgend im Wesentlichen nur die Unterschiede zu den vorhergehenden Ausführungsbeispielen beschrieben und ansonsten auf die Ausführungen zu den Figuren 1 bis 4 verwiesen. Vorliegend ist das mindestens eine Stützelement 538 durch Schüttgut 580 gebildet sein. Das Schüttgut 580 (z.B. in Form von Gesteinsbrocken 580) kann an einer Außenwand 508, vorzugsweise mit einem Abstand, rampenförmig aufgeschüttet sein. Das Seekabel 518 kann dann auf das Schüttgut 580 abgelegt und durch die gebildete obere Oberfläche (insbesondere ein ausreichend breites und schräg verlaufendes Plateau) des Schüttgutstützelements 538 geführt sein. Das Schüttgut 580 kann insbesondere eine hinreichend große (durchschnittliche) Korngröße aufweisen, die insbesondere ein Auskolken des Seekabels und/oder ein Abtragen des Schüttgutstützelements 538 infolge der vorherrschenden Meeresströmung verhindert.

Die durchschnittliche Korngröße kann zwischen 1 mm und 5000 mm liegen. Bevorzugt kann durchschnittliche Korngröße zwischen mindestens 200 mm und 5000 mm liegen, weiter bevorzugt zwischen mindestens 1000 mm und 5000 mm.

Vorzugsweise kann auf der oberen Oberfläche des Schüttgutstützelements 538 ein Verfüllbaustoff 582 (z.B. Grout, Grauguß, Kabelzement etc.), insbesondere zumindest teilweise über das Seekabel 518, vergossen sein. Hierdurch kann das Seekabel 518 noch sicherer fixiert werden.

Es versteht sich, dass die Ausführungsbeispiele miteinander kombiniert werden können. Beispielsweise können unterschiedliche Stützelemente miteinander und/oder unterschiedliche Kabelführungsanordnungen mit unterschiedlichen Gründungen kombiniert werden, beispielsweise die Kabelführungsanordnung 300 bei der Gründung nach Figur 1 oder 2 eingesetzt werden.

## Patentansprüche

1. Offshore-Windenergiesystem (100, 200, 300, 400, 500), umfassend:
- eine Gründung (102, 202, 302, 402, 502) mit einem ersten Hohlstrukturelement (106, 206, 306, 406, 506) mit einer sich in Längsrichtung erstreckenden, umlaufenden ersten Wandung (105, 205, 305, 405, 505),
- wobei in der ersten Wandung (105, 205, 305, 405, 505) eine die erste Wandung (105, 205, 305, 405, 505) durchbrechende Kabeldurchführung (126, 226, 326, 426, 526) angeordnet ist, und
- mindestens eine sich in radiale Richtung ersteckende und an einer äußeren Mantelfläche der ersten Wandung (105, 205, 305, 405, 505) des ersten Hohlstrukturelement (106, 206, 306, 406, 506) angeordnete Kabelführungsanordnung (104, 204, 304, 404, 504), eingerichtet zum Führen eines aus der Kabeldurchführung (126, 226, 326, 426, 526) austretenden Seekabels (118, 218, 318, 418, 518) von der Kabeldurchführung (126, 226, 326, 426, 526) zu einer Unterwasserbodenoberfläche (122, 222, 322, 422, 522),
- **dadurch gekennzeichnet, dass**
die Kabelführungsanordnung und dessen mindestens ein Element die äußere Mantelfläche des ersten Hohlstrukturelements nicht direkt berührt und in einem radialen Abstand zwischen 0,25 m und 3m von der äußeren Mantelfläche angeordnet ist.

2. Offshore-Windenergiesystem (100, 200, 300, 400, 500) nach Anspruch 1,
**dadurch gekennzeichnet, dass**
- dass die Kabeldurchführung (126, 226, 326, 426, 526) des ersten Hohlstrukturelements (106, 206, 306, 406, 506) in einem Installationszustand der Gründung (102, 202, 302, 402, 502) zumindest über 5 m oberhalb der Unterwasserbodenoberfläche (122, 222, 322, 422, 522) liegt, insbesondere über 6 m, insbesondere bevorzugt zwischen 8 m und 12 m.

3. Offshore-Windenergiesystem (100, 200, 300, 400, 500) nach Anspruch 1 oder 2, **dadurch gekennzeichnet, dass** die Gründung (102, 202, 302, 402, 502) umfasst:
- ein zweites Hohlstrukturelement (240, 340, 440, 540) mit einem Überlappabschnitt (242, 342, 442, 542), der über einen Endabschnitt (246, 346, 446, 546) des ersten Hohlstrukturelements (106, 206, 306, 406, 506) ragt, und mit einem Einbindeabschnitt (244, 344, 444, 544), der zumindest teilweise in einem Unterwasserboden (120, 220, 320, 420, 520) einbindbar ist,
- wobei die Kabeldurchführung (126, 226, 326, 426, 526) des ersten Hohlstrukturelements (106, 206, 306, 406, 506) zumindest oberhalb des Überlappabschnitts (242, 342, 442, 542) angeordnet ist.

4. Offshore-Windenergiesystem (100, 200, 300, 400, 500) nach Anspruch 3,
**dadurch gekennzeichnet, dass**
- ein Ringraum (252, 352, 452, 552) zwischen einer inneren Mantelfläche (250, 350, 450, 550) des zweiten Hohlstrukturelements (240, 340, 440, 540) und der äußeren Mantelfläche (108, 208, 308, 408, 508) des ersten Hohlstrukturelements (106, 206, 306, 406, 506) zumindest teilweise vergroutet ist,
und/oder
- ein Ringraum (252, 352, 452, 552) zwischen einer äußeren Mantelfläche (258, 358, 458, 558) des zweiten Hohlstrukturelements (240, 340, 440, 540) und der inneren Mantelfläche (110, 210, 310, 410, 510) des ersten Hohlstrukturelements (106, 206, 306, 406, 506) zumindest teilweise vergroutet ist.

5. Offshore-Windenergiesystem (100, 200, 300, 400, 500) nach einem der vorherigen Ansprüche, **dadurch gekennzeichnet, dass**
- die Kabelführungsanordnung (104, 204, 304, 404, 504) mindestens ein Stützelement (138, 238, 338, 438, 538) umfasst, eingerichtet zumindest zur vertikalen Stützung des Seekabels (118, 218, 318, 418, 518).

6. Offshore-Windenergiesystem (100, 200, 300, 400, 500) nach Anspruch 5,
**dadurch gekennzeichnet, dass**
- sich eine Höhe des mindestens einen Stützelements (138, 238, 338, 438, 538) in radialer Richtung stufenförmig oder stetig reduziert.

7. Offshore-Windenergiesystem (100, 200, 300, 400, 500) nach Anspruch 5 oder 6, **dadurch gekennzeichnet, dass**
- das mindestens eine Stützelement (138, 238, 338, 438, 538) ein Betonfertigbauteil (138, 238, 338, 438) ist.

8. Offshore-Windenergiesystem (100, 200, 300, 400, 500) nach Anspruch 5 oder 6, **dadurch gekennzeichnet, dass**
- das mindestens eine Stützelement (138, 238, 338, 438, 538) eine an dem Unterwasserseeboden (120, 220, 320, 420, 520) verankerbare Seilspannungsanordnung (338) ist.

9. Offshore-Windenergiesystem (100, 200, 300, 400, 500) nach einem der vorherigen Ansprüche, **dadurch gekennzeichnet, dass**
- das mindestens eine Stützelement (138, 238, 338, 438, 538) eine Kabelaufnahme (260, 360, 460) zum Führen des Seekabels (118, 218, 318, 418, 518) aufweist,
- wobei die Form der Kabelaufnahme (260, 360, 460) zu der Form des Seekabels (118, 218, 318, 418, 518) korrespondiert.

10. Offshore-Windenergiesystem (100, 200, 300, 400, 500) nach Anspruch 9,
**dadurch gekennzeichnet, dass**
- die Kabelaufnahme (260, 360, 460) eine kanalartige in eine radiale Richtung verlaufende Vertiefung (260, 460) in einer oberseitigen Oberfläche des mindestens einen Stützelements (118, 218, 318, 418, 518) ist,
- wobei ein Durchmesser der Vertiefung (260, 460) zumindest größer ist als ein Außendurchmesser des Seekabels (118, 218, 318, 418, 518).

11. Offshore-Windenergiesystem (100, 200, 300, 400, 500) nach einem der vorherigen Ansprüche, **dadurch gekennzeichnet, dass**
- die Kabelführungsanordnung (104, 204, 304, 404, 504) mindestens ein Kabelfixiermodul (266, 582) umfasst, eingerichtet zum Fixieren des Seekabels (118, 218, 318, 418, 518) an der Kabelführungsanordnung (104, 204, 304, 404, 504).

12. Offshore-Windenergiesystem (100, 200, 300, 400, 500) nach Anspruch 11, **dadurch gekennzeichnet, dass**
- das mindestens eine Kabelfixiermodul (266, 582) ein Klippmechanismus (266) ist.

13. Offshore-Windenergiesystem (100, 200, 300, 400, 500) nach Anspruch 11, **dadurch gekennzeichnet, dass**
- das mindestens eine Kabelfixiermodul (266, 582) ein Verfüllbaustoff (582) ist, insbesondere ein Kabelzement.

14. Offshore-Bauwerk (114), insbesondere Offshore-Windenergiebauwerk (114), umfassend:
- mindestens ein Offshore-Windenergiesystem (100, 200, 300, 400, 500) nach einem der vorherigen Ansprüche, und
- mindestens eine durch eine Gründung (102, 202, 302, 402, 502) des Offshore-Windenergiesystems (100, 200, 300, 400, 500) getragene Offshore-Einrichtung (116).

## Claims

1. An offshore wind energy system (100, 200, 300, 400, 500) comprising:
- a foundation (102, 202, 302, 402, 502) having a first hollow structural element (106, 206, 306, 406, 506) having a longitudinally extending first peripheral wall (105, 205, 305, 405, 505),
- wherein a cable opening (126, 226, 326, 426, 526) is arranged in the first wall (105, 205, 305, 405, 505) and passes through the first wall (105, 205, 305, 405, 505), and
- at least one cable guide arrangement (104, 204, 304, 404, 504) extending in the radial direction and arranged at an outer lateral surface of the first wall (105, 205, 305, 405, 505) of the first hollow structure element (106, 206, 306, 406, 506) (104, 204, 304, 404, 504), wherein the cable guide arrangement (104, 204, 304, 404, 504) is configured to guide a submarine cable (118, 2 18, 318, 418, 518) from the cable opening (126, 226, 326, 426, 526) to an underwater bottom surface (122, 222, 322, 422, 522),
**characterized in that** the cable guide arrangement and its at least one element do not directly touch the outer lateral surface of the first hollow structural element and are arranged at a radial distance of between 0.25 m and 3 m from the outer lateral surface.

2. The offshore wind energy system (100, 200, 300, 400, 500) according to claim 1, **characterized in that**
that the cable opening (126, 226, 326, 426, 526) of the first hollow structure element (106, 206, 306, 406, 506) is arranged in an installation state of the foundation (102, 202, 302, 402, 502) at least 5 m above the underwater bottom surface (122, 222, 322, 422, 522), in particular at least 6 m, in particular preferably between 8 m and 12 m.

3. The offshore wind energy system (100, 200, 300, 400, 500) according to claim 1 or 2, **characterized in that** the foundation (102, 202, 302, 402, 502) comprises:
- a second hollow structural element (240, 340, 440, 540) having an overlapping section (242, 342, 442, 542) that extends over an end portion (246, 346, 446, 546) of the first hollow structural element (10 6, 206, 306, 406, 506), and having a tie-in section (244, 344, 444, 544) that can be at least partially tied into an underwater bottom (120, 220, 320, 420, 520),
- wherein the cable opening (126, 226, 326, 426, 526) of the first hollow structure element (106, 206, 306, 406, 506) is arranged at least above the overlapping section (242, 342, 442, 542).

4. The offshore wind energy system (100, 200, 300, 400, 500) according to claim 3, **characterized in that**
- an annular space (252, 352, 452, 552) between an inner lateral surface (250, 350, 450, 550) of the second hollow structure element (240, 340, 440, 5 40) and the outer lateral surface (108, 208, 308, 408, 508) of the first hollow structural element (106, 206, 306, 406, 506) is at least partially grouted,
and/or
- an annular space (252, 352, 452, 552) between an outer circumferential surface (258, 358, 458, 558) of the second hollow structural element (240, 340, 440, 5 40) and the inner lateral surface (110, 210, 310, 410, 510) of the first hollow structural element (106, 206, 306, 406, 506) is at least partially grouted.

5. The offshore wind energy system (100, 200, 300, 400, 500) according to any of the previous claims, **characterized in that**
- the cable guide arrangement (104, 204, 304, 404, 504) comprises at least one supporting element (138, 238, 33 8, 438, 538) configured to at least vertically support the submarine cable (118, 218, 318, 418, 518).

6. The offshore wind energy system (100, 200, 300, 400, 500) according to claim 5, **characterized in that**
- the height of the at least one supporting element (138, 238, 338, 438, 538) is reduced in a step-like or continuous manner in the radial direction.

7. The offshore wind energy system (100, 200, 300, 400, 500) according to claim 5 or 6, **characterized in that**
the at least one supporting element (138, 238, 338, 438, 538) is a precast concrete component (138, 238, 338, 438).

8. The offshore wind energy system (100, 200, 300, 400, 500) according to claim 5 or 6, **characterized in that**
the at least one supporting element (138, 238, 338, 438, 538) is a cable tensioning arrangement (338) that can be anchored to the underwater bottom (120, 220, 320, 420, 520).

9. The offshore wind energy system (100, 200, 300, 400, 500) according to one of the previous claims, **characterized in that**
- the at least one supporting element (138, 238, 338, 438, 538) comprises a cable receptacle (260, 360, 460) for guiding the submarine cable (118, 218, 318, 418, 518),
- wherein the shape of the cable receptacle (260, 360, 460) corresponds to the shape of the submarine cable (118, 218, 318, 418, 518).

10. The offshore wind energy system (100, 200, 300, 400, 500) according to claim 9, **characterized in that**
- the cable receptacle (260, 360, 460) is a channel-like recess (260, 460) running in a radial direction in a top surface of the at least one supporting element (118, 218, 318, 418, 518),
- wherein a diameter of the recess (260, 460) is at least greater than an outer diameter of the submarine cable (118, 218, 318, 418, 518).

11. The offshore wind energy system (100, 200, 300, 400, 500) according to any of the preceding claims, **characterized in that**
- the cable guide arrangement (104, 204, 304, 404, 504) comprises at least one cable fixing module (266, 582) configured to fix the submarine cable (118, 218, 318, 418, 518) to the cable guide arrangement (104, 204, 304, 404, 504).

12. The offshore wind energy system (100, 200, 300, 400, 500) according to claim 11, **characterized in that**
- the at least one cable fixing module (266, 582) is a clip mechanism (266).

13. The offshore wind energy system (100, 200, 300, 400, 500) according to claim 11, **characterized in that**
- the at least one cable fixing module (266, 582) is a backfill material (582), in particular a cable cement.

14. An offshore structure (114), in particular an offshore wind energy structure (114), comprising:
- at least one offshore wind energy system (100, 200, 300, 400, 500) according to any of the previous claims, and
- at least one offshore facility (116) supported by a foundation (102, 202, 302, 402, 502) of the offshore wind energy system (100, 200, 300, 400, 500).

## Revendications

1. Système d'énergie éolienne offshore (100, 200, 300, 400, 500), comprenant :
- un fondement (102, 202, 302, 402, 502) avec un premier élément de structure creux (106, 206, 306, 406, 506) avec une première paroi (105, 205, 305, 405, 505) circonférentiel, s'étendant longitudinalement,
- où un passage de câble (126, 226, 326, 426, 526) traversant la première paroi (105, 205, 305, 405, 505) est disposé dans la première paroi (105, 205, 305, 405, 505), et
- au moins un dispositif de guidage de câble (104, 204, 304, 404, 504) s'étendant dans direction radiale et disposé sur une surface d'enveloppe extérieure de la première paroi (105, 205, 305, 405, 505) du premier élément de structure creux (106, 206, 306, 406, 506), 504), configuré pour guider un câble sous-marin (118, 218, 318, 418, 518) sortant du passage de câble (126, 226, 326, 426, 526) depuis le passage de câble (126, 226, 326, 426, 526) vers une surface de fond sous-marine (122, 222, 322, 422, 522),
- **caractérisé en ce que** dispositif de guidage de câble et son au moins un élément ne sont pas en contact direct avec la surface d'enveloppe extérieure du premier élément de structure creux et sont situés à une distance radiale comprise entre 0,25 m et 3 m de la surface d'enveloppe extérieure.

2. Système d'énergie éolienne offshore (100, 200, 300, 400, 500) selon la revendication 1, **caractérisé en ce que**
- le passage de câble (126, 226, 326, 426, 526) du premier élément de structure creux (106, 206, 306, 406, 506) est situé, dans un état d'installation du fondement (102, 202, 302, 402, 502), au moins à plus de 5 m au-dessus de la surface du fond sous-marin (122, 222, 322, 422, 522), en particulier à plus de 6 m, surtout préférentiellement entre 8 m et 12 m.

3. Système d'énergie éolienne offshore (100, 200, 300, 400, 500) selon la revendication 1 ou 2, **caractérisé en ce que** le fondement (102, 202, 302, 402, 502) comprend :
- un deuxième élément de structure creux (240, 340, 440, 540) avec une partie de chevauchement (242, 342, 442, 542) qui fait saillie au-dessus d'une partie d'extrémité (246, 346, 446, 546) du premier élément de structure creux (106, 206, 306, 406, 506), et avec une partie d'encastrement (244, 344, 444, 544) qui est au moins partiellement encastrable dans un fond sous-marin (120, 220, 320, 420, 520),
- où le passage de câble (126, 226, 326, 426, 526) du premier élément de structure creux (106, 206, 306, 406, 506) est situé au moins au-dessus de la partie de chevauchement (242, 342, 442, 542).

4. Système d'énergie éolienne offshore (100, 200, 300, 400, 500) selon la revendication 3, **caractérisé en ce que**
- un espace annulaire (252, 352, 452, 552) est au moins partiellement jointoyé entre une surface d'enveloppe intérieure (250, 350, 450, 550) du deuxième élément de structure creux (240, 340, 440, 540) et la surface d'enveloppe extérieure (108, 208, 308, 408, 508) du premier élément de structure creux (106, 206, 306, 406, 506),
et/ou
- un espace annulaire (252, 352, 452, 552) entre une surface d'enveloppe extérieure (258, 358, 458, 558) du deuxième élément de structure creux (240, 340, 440, 540) et la surface d'enveloppe intérieure (110, 210, 310, 410, 510) du premier élément de structure creux (106, 206, 306, 406, 506) est au moins partiellement jointoyé.

5. Système d'énergie éolienne offshore (100, 200, 300, 400, 500) selon l'une des revendications précédentes, **caractérisé en ce que**
- le dispositif de guidage de câble (104, 204, 304, 404, 504) comprend au moins un élément de support (138, 238, 338, 438, 538) configuré pour supporter au moins verticalement le câble sous-marin (118, 218, 318, 418, 518).

6. Système d'énergie éolienne offshore (100, 200, 300, 400, 500) selon la revendication 5, **caractérisé en ce que**
- une hauteur du au moins un élément de support (138, 238, 338, 438, 538) se réduit de manière étagée ou continue en direction radiale.

7. Système d'énergie éolienne offshore (100, 200, 300, 400, 500) selon la revendication 5 ou 6, **caractérisé en ce que**
- le au moins un élément de support (138, 238, 338, 438, 538) est un élément préfabriqué en béton (138, 238, 338, 438).

8. Système d'énergie éolienne offshore (100, 200, 300, 400, 500) selon la revendication 5 ou 6, **caractérisé en ce que**
- le au moins un élément de support (138, 238, 338, 438, 538) est un ensemble de tension de câble (338) ancrable sur le fond sous-marin (120, 220, 320, 420, 520).

9. Système d'énergie éolienne offshore (100, 200, 300, 400, 500) selon l'une des revendications précédentes, **caractérisé en ce que**
- le au moins un élément de support (138, 238, 338, 438, 538) comprend un logement de câble (260, 360, 460) pour guider le câble sous-marin (118, 218, 318, 418, 518),
- où la forme du logement de câble (260, 360, 460) correspond à la forme du câble sous-marin (118, 218, 318, 418, 518).

10. Système d'énergie éolienne offshore (100, 200, 300, 400, 500) selon la revendication 9, **caractérisé en ce que**
- le logement de câble (260, 360, 460) est une cavité en forme de canal (260, 460) s'étendant en direction radiale dans une surface supérieure du au moins un élément de support (118, 218, 318, 418, 518),
- où un diamètre de la cavité (260, 460) est au moins plus grand qu'un diamètre extérieur du câble sous-marin (118, 218, 318, 418, 518).

11. Système d'énergie éolienne offshore (100, 200, 300, 400, 500) selon l'une des revendications précédentes, **caractérisé en ce que**
- l'ensemble de guidage de câble (104, 204, 304, 404, 504) comprend au moins un module de fixation de câble (266, 582) configuré pour fixer le câble sous-marin (118, 218, 318, 418, 518) sur le dispositif de guidage de câble (104, 204, 304, 404, 504).

12. Système d'énergie éolienne offshore (100, 200, 300, 400, 500) selon la revendication 11, **caractérisé en ce que**
- le au moins un module de fixation de câble (266, 582) est un mécanisme de clippage (266).

13. Système d'énergie éolienne offshore (100, 200, 300, 400, 500) selon la revendication 11, **caractérisé en ce que**
- le au moins un module de fixation de câble (266, 582) est un matériau de construction de remplissage (582), en particulier un ciment pour câble.

14. Structure offshore (114), en particulier structure d'énergie éolienne offshore (114), comprenant :
- au moins un système éolien offshore (100, 200, 300, 400, 500) selon l'une des revendications précédentes, et
- au moins un équipement offshore (116) porté par un fondement (102, 202, 302, 402, 502) du système d'énergie éolien offshore (100, 200, 300, 400, 500).
